# EUROPEAN PATENT APPLICATION

(11) **EP 3 127 754 A1**
(43) Date of publication of application: **08.02.2017**
(21) Application number: 16182668.0
(22) Date of filing: 04.08.2016
(51) Int. Cl.: B60R 19/18, B62D 21/15

(54) **VEHICLE BODY FRAMEWORK STRUCTURE**

(30) Priority: 06.08.2015 JP 2015156219
(71) Applicant: Toyota Jidosha Kabushiki Kaisha, Toyota-shi, Aichi-ken, 471-8571 (JP)
(72) Inventor: HASHIDA, Shigenori, TOYOTA-SHI, AICHI-KEN, 471-8571 (JP); KITAKATA, Shintaro, TOYOTA-SHI, AICHI-KEN, 471-8571 (JP)
(74) Representative: Intès, Didier Gérard André

(57) **Abstract**

A vehicle body framework structure includes: a framework member (12) that is formed in an elongated rectangular tube shape; and a reinforcement member (14) that is disposed inside the framework member (12); and that includes a main portion that is configured in a shape contacting both of a pair of opposing inner faces (20, 22) of the framework member (12), and a leading end portion that is configured in a shape that gradually separates away from both of the pair of inner faces (20, 22).

## Description

### BACKGROUND

### Technical Field

The present disclosure relates to a vehicle body framework structure.

### Related Art

Japanese Patent Application Laid-Open (JP-A) No. 2008-24019 describes a structure in which a reinforcement member is inbuilt to a hollow elongated bumper member (hollow framework member).

However, in cases in which the above structure is applied to a bumper member made of carbon-fiber reinforced plastic (CFRP) or a bumper member made of aluminum alloy, it is conceivable that the bumper member breaks or yields at a portion at an end of the inbuilt reinforcement member.

### SUMMARY

In consideration of the above circumstances, in a vehicle body framework structure in which a reinforcement member is inbuilt in a hollow framework member, the present disclosure provides a vehicle body framework structure in which the framework member is reduced, or even suppressed from breaking or yielding.

An aspect of the present disclosure is a vehicle body framework structure including a framework member that is formed in an elongated rectangular tube shape; and a reinforcement member that is disposed inside the framework member; and that includes a main portion that is configured in a shape contacting both of a pair of opposing inner faces of the framework member, and a leading end portion that is configured in a shape that gradually separates away from both of the pair of inner faces.

In the vehicle body framework structure of the present aspect, the reinforcement member is provided inside the framework member formed in an elongated rectangular tube shape. The reinforcement member includes the main portion and the leading end portion. The main portion is configured in a shape contacting both of the pair of opposing inner faces of the framework member. The framework member is thereby reinforced by a portion of the reinforcement member where the main portion is disposed, such that the cross-section of the framework member is reduced, or even suppressed from collapsing.

The leading end portion is configured in a shape that gradually separates away from both the pair of opposing inner faces of the framework member. Thus, in cases in which load in a direction in which the above-mentioned pair of inner faces oppose each other is input to the framework member, and the framework member undergoes bending deformation, the inner faces of the framework member warp while making contact with the leading end portion of the reinforcement member. As a result, a concentration of stress is thereby reduced, or even suppressed from occurring, and warping by a fixed amount or greater is also suppressed. As a result the framework member is reduced, or even suppressed from breaking or yielding.

In the above aspect the framework member may be bumper reinforcement extending along a vehicle width direction and that is attached to both of a pair of front ends of coupling members extending along a vehicle front-rear direction on either vehicle width direction side of a vehicle front section; and a pair of the reinforcement member may be disposed respectively at both of a pair of vehicle width direction ends of the bumper reinforcement, and each of the reinforcement members may be disposed such that the leading end portion is directed toward a vehicle width direction inside, and the main portion is disposed at a position including a portion of the bumper reinforcement facing the front end of the respective coupling member.

In the above structure, for example, in cases in which a small overlap collision of the vehicle has occurred (for example, among vehicle front-on collisions, a collision with an overlap amount with a colliding body of 25% or less in the vehicle width direction as specified by Insurance Institute for Highway Safety (IIHS)), the bumper reinforcement is reduced, or even suppressed from breaking partway along the vehicle width direction. As a result, collision energy can be efficiently absorbed, and the load can be efficiently transmitted to the coupling member.

The main portion may have a rectangular cross-section profile orthogonal to a length direction of the reinforcement member.

Also with this configuration, a concentration of stress is reduced, or even suppressed from occurring, and warping by a fixed amount or greater is reduced, or even suppressed. As a result the framework member is reduced, or even suppressed from breaking or yielding.

Alternatively, the main portion may have a hat shaped cross-section profile orthogonal to a length direction of the reinforcement member.

In the above configuration, the main portion may include a front wall that contacts a first face of the pair of opposing inner faces of the framework member; an upper wall and a lower wall that extend from each respective end portion of the front wall toward a second face of the pair of opposing inner faces of the framework member; and a pair of rear walls that extend from respective end portions of the upper wall and the lower wall contacting the second face, and extend along the second face.

Also with the above configuration, a concentration of stress is reduced, or even suppressed from occurring, and warping by a fixed amount or greater is reduced, or even suppressed. As a result the framework member is reduced, or even suppressed from breaking or yielding. Further, the cost of manufacture of the vehicle body framework structure may be reduced.

### BRIEF DESCRIPTION OF THE DRAWINGS

Exemplary embodiments of the present disclosure will be described in detail based on the following figures, wherein:
Fig. 1A is a perspective view illustrating an overall configuration of a vehicle body framework structure of a first exemplary embodiment;
Fig. 1B is an enlarged cross-section of Fig. 1A along line 1B-1B;
Fig. 1C is an enlarged perspective view illustrating only a reinforcement member of the vehicle body framework structure of the first exemplary embodiment;
Fig. 2A is a lateral cross-section of Fig. 1B, sectioned along line 2A-2A;
Fig. 2B is a lateral cross-section of Fig. 1B, sectioned along line 2B-2B;
Fig. 3A is an enlarged perspective view illustrating only a reinforcement member of a vehicle body framework structure of a second exemplary embodiment;
Fig. 3B is a cross-section, corresponding to Fig. 2A, of the vehicle body framework structure of the second exemplary embodiment;
Fig. 3C is a cross-section, corresponding to Fig. 2B, of the vehicle body framework structure of the second exemplary embodiment;
Fig. 4A is a plan cross-section illustrating a vehicle body framework structure of a third exemplary embodiment illustrating a state before a small overlap collision has occurred;
Fig. 4B is a plan cross-section illustrating the vehicle body framework structure of the third exemplary embodiment illustrating a state immediately after a small overlap collision has occurred;
Fig. 4C illustrates a state in which time has progressed slightly from the state in Fig. 4B;
Fig. 5A is a diagram illustrating a vehicle body framework structure of a comparative example, corresponding to Fig. 1B;
Fig. 5B is a lateral cross-section, corresponding to Fig. 2A, of the vehicle body framework structure of the comparative example; and
Fig. 5C is a lateral cross-section, corresponding to Fig. 2B, of the vehicle body framework structure of the comparative example.

### DETAILED DESCRIPTION

### First Exemplary Embodiment

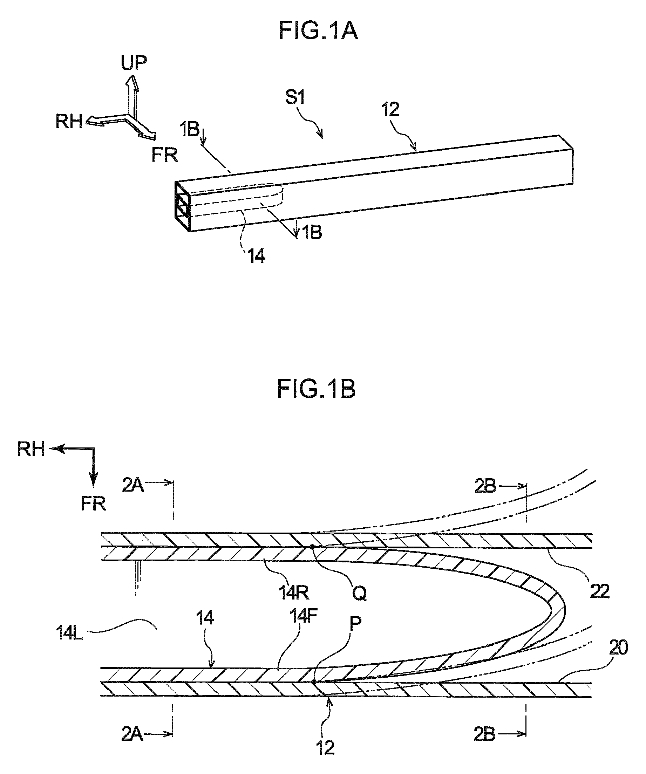

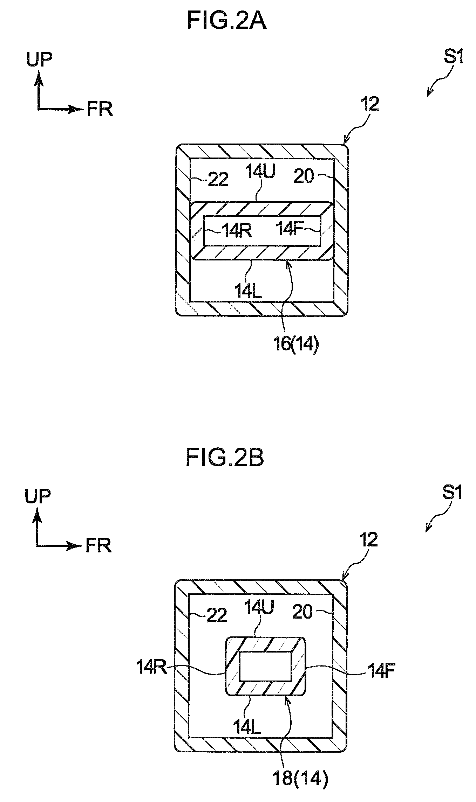

Explanation follows regarding a first exemplary embodiment, with reference to Figs. 1A to 1C and Figs. 2A and 2B. Note that in the following explanation, for ease of explanation, a case will be described in which the arrow UP is the up direction, the arrow FR is the front direction, and the arrow RH is the right direction in each of the drawings.

Fig 1A illustrates a vehicle body framework structure S1 of the first exemplary embodiment. As illustrated in Fig. 1A, the vehicle body framework structure S1 includes a hollow framework member 12, and a reinforcement member 14 provided inside the framework member 12. The material of both the framework member 12 and the reinforcement member 14 is a carbon-fiber reinforced plastic (referred to hereafter as "CFRP").

The framework member 12 is an elongated shaped member with a rectangular cross-section profile, which has a space inside. The reinforcement member 14 is provided at one end portion of the framework member 12 (for example, the right end portion), this being an inner portion of the framework member 12.

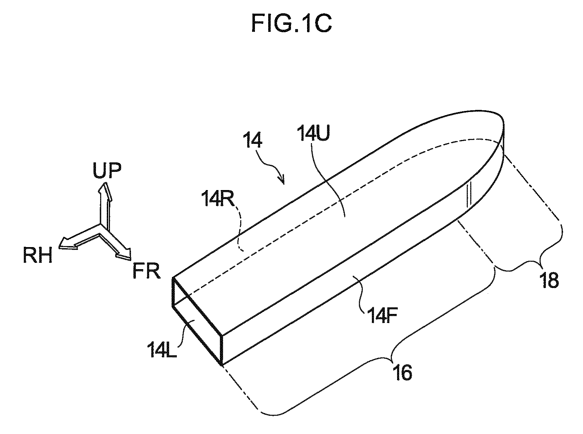

Fig. 1C illustrates an enlarged reinforcement member 14. The reinforcement member 14 includes a substantially rectangular shaped main portion 16 and a leading end portion 18 that is formed continuously to the main portion 16 and is configured in a tapered shape in plan view (i.e., viewed from above). In other words, as illustrated in Fig. 1B, the reinforcement member 14 includes the main portion 16 configured, in plan view, in a shape running along a pair of opposing inner faces 20, 22 of the framework member 12, and with the leading end portion 18 configured in a shape gradually separating from the pair of opposing inner faces 20, 22 of the framework member 12.

The reinforcement member 14 is configured by a front wall 14F, an upper wall 14U, a rear wall 14R and a lower wall 14L, and has a rectangular cross-section profile when cut along a plane orthogonal to the left-right direction (length direction of the framework member 12). In the cross-section profile of the leading end portion 18 of the reinforcement member 14, the spacing between the front wall 14F and the rear wall 14R gradually narrows as distancing away from the main portion 16. In contrast, the spacing between the upper wall 14U and the lower wall 14L of the reinforcement member 14 is substantially uniform.

Fig. 2A illustrates a cross-section of the main portion 16. As illustrated in Fig. 2A, in the main portion 16, the front wall 14F of the reinforcement member 14 makes contact with one inner face 20 of the pair of opposing inner faces 20, 22 of the hollow framework member 12, and the rear wall 14R of the reinforcement member 14 makes contact with the other inner face 22. The reinforcement member 14 is joined to the framework member 12 at the main portion 16. Vibration welding may be used as the joining method.

Fig. 2B illustrates a cross-section of the leading end portion 18. As illustrated in Fig. 2B, in the leading end portion 18, the front wall 14F of the reinforcement member 14 separates away from the one inner face 20 of the opposing inner faces 20, 22 of the framework member 12, and the rear wall 14R of the reinforcement member 14 separates away from the other inner face 22.

As illustrated in Figs. 1B and 1C, the front wall 14F and the rear wall 14R of the reinforcement member 14 are formed smoothly and continuously at the boundary between the main portion 16 and the leading end portion 18. Thus, the front wall 14F and the rear wall 14R of the reinforcement member 14 approach the pair of opposing inner faces 20, 22 of the framework member 12 at the portion of the leading end portion 18 approaching the main portion 16. In the leading end portion 18, the front wall 14F and the rear wall 14R of the reinforcement member 14 are configured with shapes that gradually separate away from the respective pair of opposing inner faces 20, 22 of the framework member 12 along the direction distancing away from the main portion 16 (i.e., toward the left side).

Note that as illustrated in Figs. 2A and 2B, the upper wall 14U and the lower wall 14L of the reinforcement member 14 are both provided separated from respective inner faces of the framework member 12 by a uniform spacing. The upper wall 14U and the lower wall 14L of the reinforcement member 14 are accordingly disposed at an up-down direction intermediate portion of the space inside the framework member 12.

The front wall 14F of the reinforcement member 14 is curved so as to be convex toward the front direction at the leading end portion 18. The rear wall 14R of the reinforcement member 14 is curved so as to be convex toward the rear direction at the leading end portion 18. In the manner above, the front wall 14F and the rear wall 14R of the reinforcement member 14 are both curved, and end portions at the other end side (left side) of the reinforcement member 14 are smoothly connected together. In other words, the front wall 14F and the rear wall 14R of the reinforcement member 14 are curved to form a convex shape projecting toward the left direction at the leading end portion 18.

As illustrated in Fig. 1B by double-dotted intermittent lines, the front wall 14F and the rear wall 14R of the reinforcement member 14 are designed such that, in cases in which the framework member 12 warps along the front wall 14F of the reinforcement member 14 that is curved at the leading end portion 18, local strain of the framework member 12 does not exceed the breaking strain of the CFRP configuring the framework member 12.

### Operation and Effects

Next, explanation follows regarding operation and effects of the present exemplary embodiment.

In the vehicle body framework structure S1 of the present exemplary embodiment, the reinforcement member 14 is provided inside the hollow framework member 12. The reinforcement member 14 includes the main portion 16, and the leading end portion 18 formed continuously to the main portion 16. The main portion 16 is configured with a shape contacting each of the pair of opposing inner faces 20, 22 of the framework member 12. The framework member 12 is thereby reinforced at a portion of the reinforcement member 14 where the main portion 16 is disposed, and the cross-section of the framework member 12 is reduced, or even suppressed from collapsing.

In contrast, the leading end portion 18 is configured with a shape that gradually separates away from both of the pair of opposing inner faces 20, 22 of the framework member 12. Thus, for example, in cases in which load in the opposing direction of the pair of inner faces 20, 22 (the front-rear direction) is input to the framework member 12, and the framework member 12 undergoes bending deformation, as illustrated in Fig. 1B, the inner face 20 of the framework member 12 warps while making contact with the front wall 14F of the reinforcement member 14 at the leading end portion 18. Namely, the framework member 12 progressively deforms while the tangent point between the framework member 12 and the reinforcement member 14 moves. Thus, during deformation, since the center of deformation of the framework member 12 always being the tangential contact point with respect to the reinforcement member 14, concentration of stress is reduced, or even suppressed by avoiding contact with an end point of the reinforcement member 14, and warping by a fixed amount or greater is reduced, or even suppressed. As a result, the framework member 12 is reduced, or even suppressed from breaking.

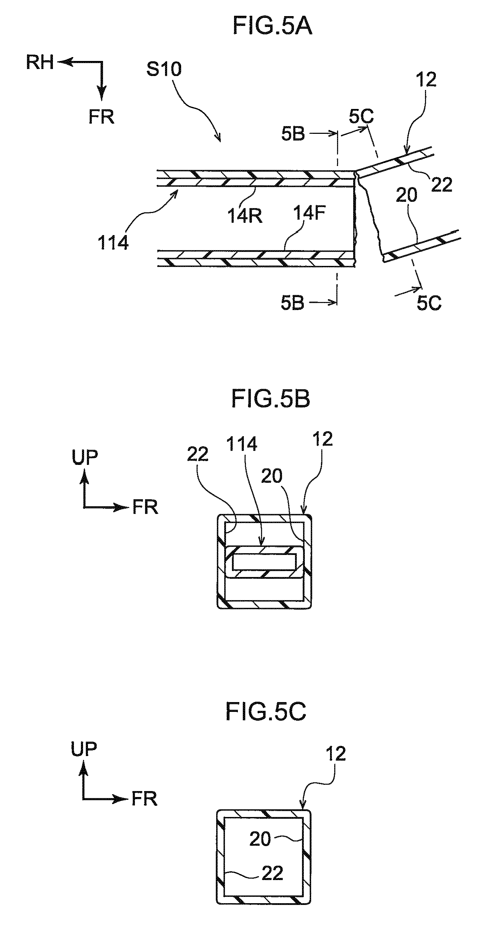

Explanation follows employing a vehicle body framework structure S10 of a comparative example illustrated in Figs. 5A to 5C. In the vehicle body framework structure S10 illustrated in Figs. 5A to 5C, a reinforcement member 114 is only formed with the main portion 16 that makes contact with both of the pair of opposing inner faces 20, 22 of the framework member 12, and is not provided with the leading end portion 18. Therefore, as illustrated in Figs. 5B and 5C, the cross-section profile of the vehicle body framework structure S10 configured by the framework member 12 and the reinforcement member 114 varies suddenly in the vicinity of an end portion of the reinforcement member 114. Thus, in cases in which bending load is input to the framework member 12, stress concentrates at the end portion of the reinforcement member 114. Since CFRP configuring the framework member 12 breaking comparatively easily, as illustrated in Fig. 5A, it is conceivable that the framework member 12 cracks at the end portion of the reinforcement member 114.

In contrast, in the vehicle body framework structure S1 of the present exemplary embodiment, the reinforcement member 14 includes the leading end portion 18 in addition to the main portion 16. As illustrated in Figs. 2A and 2B, the cross-section profile of the vehicle body framework structure S1 therefore does not suddenly vary at the end portion of the reinforcement member 14. Thus, even in cases in which the bending load is input to framework member 12, concentration of stress is reduced, or even suppressed, and as a result, cracking in the framework member 12 is reduced, or even suppressed. Namely, during the deformation, the center of deformation of the framework member 12 is always the tangential contact point to the reinforcement member 14, such that the framework member 12 progressively deforms while the tangent point between the framework member 12 and the reinforcement member 14 moves. There is accordingly no localized increase in stress.

### Second Exemplary Embodiment

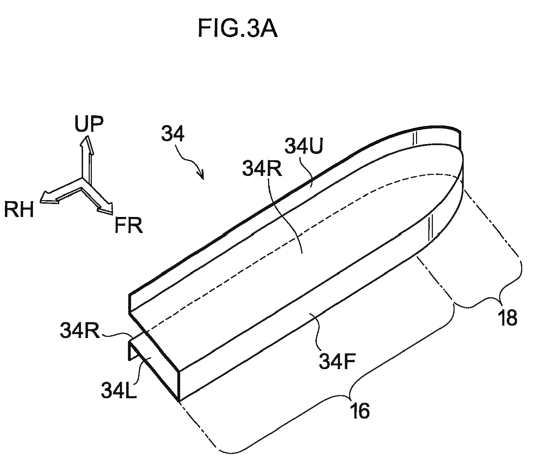

Explanation follows regarding a second exemplary embodiment according to the present disclosure, with reference to Figs. 3A to 3C. Note that components similar to those in the first exemplary embodiment described above are appended with the same reference numerals, and explanation thereof is omitted.

A vehicle body framework structure S2 of the second exemplary embodiment differs from the first exemplary embodiment only in the shape of a reinforcement member 34, and so explanation follows regarding the reinforcement member 34.

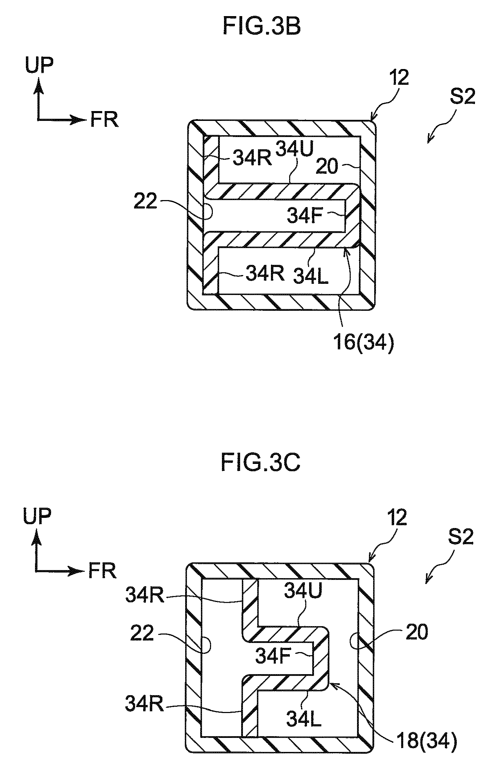

The reinforcement member 34 of the second exemplary embodiment is configured in a hat shape. Figs. 3B and 3C illustrate cross-sections orthogonal to the length direction of the framework member 12 (the left-right direction). In the main portion 16 illustrated in Fig. 3B, the reinforcement member 34 includes a front wall 34F that contacts an up-down direction intermediate portion of the one inner face 20 of the pair of opposing inner faces 20, 22 of the framework member 12. An upper wall 34U and a lower wall 34L extend from respective upper and lower end portions of the front wall 34F toward the other inner wall 22 of the framework member 12. A pair of upper and lower rear walls 34R extends from rear ends of the respective upper wall 34U and the lower wall 34L toward the respective upper and lower sides. The pair of upper and lower rear walls 34R contacts the other inner face 22 of the framework member 12.

The front wall 34F and the rear wall 34R of the reinforcement member 34 are separated from the pair of opposing inner faces 20, 22 of the framework member 12 at the leading end portion 18 illustrated in Fig. 3C.

As described above, the reinforcement member 34 of the second exemplary embodiment greatly differs from the reinforcement member 14 of the first exemplary embodiment in cross-section profile orthogonal to the length direction of the framework member 12. However, the shape of the reinforcement member 34 in plan view is substantially the same as that of the reinforcement member 14 of the first exemplary embodiment.

The second exemplary embodiment configured in this manner also exhibits similar operation and effects to those explained in the first exemplary embodiment. Moreover, in the second exemplary embodiment, the reinforcement member 34 is easy to form due to being configured in a hat shape, thereby enabling the cost of manufacture of the vehicle body framework structure S2 to be reduced.

### Third Exemplary Embodiment

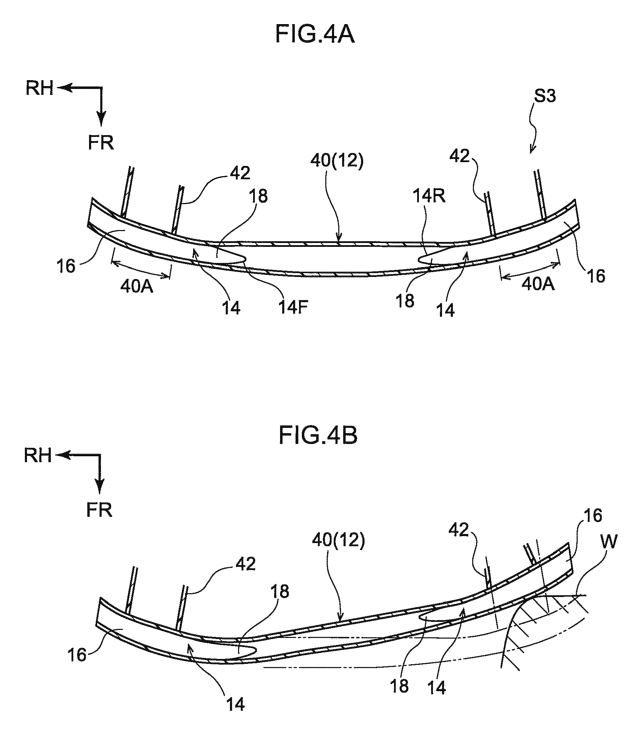

Explanation follows regarding a third exemplary embodiment according to the present disclosure, with reference to Figs. 4A to 4C. Note that the arrow FR and the arrow RH illustrated in Figs. 4A to 4C respectively indicate the vehicle front direction and the vehicle right direction.

Fig. 4A illustrates a vehicle body framework structure S3 of the third exemplary embodiment. As illustrated in Fig. 4A, in the third exemplary embodiment, the vehicle body framework structure S3 is applied to bumper reinforcement 40 provided along the vehicle width direction at a vehicle front section.

The bumper reinforcement 40 is a framework member provided extending along the vehicle width direction, and is disposed at the vehicle rear of a front bumper (not illustrated in the drawings) of a vehicle. A pair of left and right crash boxes 42 are attached to the vehicle rear of the bumper reinforcement 40. The crash boxes 42 are disposed with their axes oriented substantially along the vehicle front-rear direction, and rear portions of the crash boxes 42 are connected to front side members (not illustrated in the drawings), these being framework members extending along substantially the vehicle front-rear direction. The front side members are coupled to a vehicle body structure at a section configuring the vehicle cabin. The crash boxes 42 and the respective front side members may be regarded as coupling members extending along the vehicle front-rear direction at both width direction sides of the vehicle front section. The crash boxes 42 and the respective front side members correspond to "coupling members" in the present disclosure.

A pair of left and right reinforcement members 14 are disposed at both vehicle width direction ends, these being portions inside the bumper reinforcement 40. In each reinforcement member 14, the main portion 16 faces toward the vehicle width direction outside, and the leading end portion 18 faces toward the vehicle width direction inside. The leading end portion 18 does not reach the vehicle width direction center of the bumper reinforcement 40, and the length of the reinforcement member 14 in the vehicle width direction is approximately one third the length of the bumper reinforcement 40. Both vehicle width direction end sections of the bumper reinforcement 40 have a shape angled toward the vehicle rear side. The main portions 16 of the reinforcement members 14 are thereby formed so as to match the angled shapes of the bumper reinforcement 40. The reinforcement members 14 are disposed at positions that respectively include each of the two ends of the bumper reinforcement 40. Namely, both ends of the bumper reinforcement 40 are reduced, or even suppressed from cross-sectional collapse by the main portion 16 of the reinforcement member 14.

The main portions 16 of the reinforcement members 14 are disposed at sections (framework facing sections 40A) of the bumper reinforcement 40 facing toward the front ends of the crash boxes 42. Namely, the main portion 16 of each reinforcement member 14 is disposed at positions that include the framework facing section 40A of the bumper reinforcement 40.

### Operation and Advantageous Effects

Explanation follows regarding operation and effects of the third exemplary embodiment.

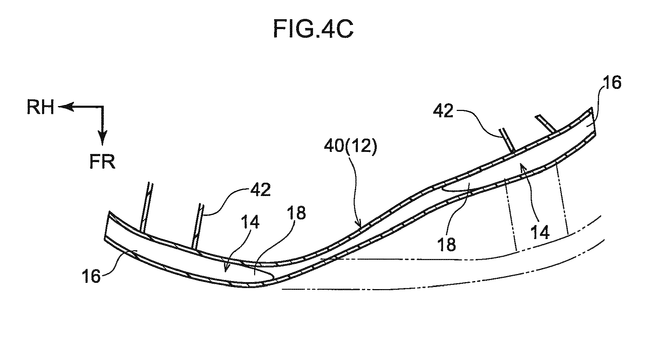

In the third exemplary embodiment, in cases in which a colliding body W has been involved in a small overlap collision, as illustrated in Figs. 4B and 4C, the bumper reinforcement 40 deforms. As illustrated in Figs. 4A and 4C, at the reinforcement member 14 on the side in the vehicle width direction where the collision has occurred, the bumper reinforcement 40 deforms along the rear wall 14R (wall on the vehicle rear side) of the reinforcement member 14. However, at the reinforcement member 14 on the side opposite in the vehicle width direction to the side where the collision has occurred, the bumper reinforcement 40 deforms along the front wall 14F of the reinforcement member 14. Due to the bumper reinforcement 40 deforming in this manner along the leading end portions 18 of the pair of reinforcement members 14 provided at the left and right, the bumper reinforcement 40 is reduced, or even suppressed from breaking partway along the vehicle width direction.

Moreover, cross-sectional collapse of the bumper reinforcement 40 is reduced, or even suppressed at sections of the bumper reinforcement 40 where the reinforcement members 14 are provided. In particular, collision load can be efficiently transmitted to the crash boxes 42 and the front side members such that the crash boxes 42 and the front side members can be made to absorb the collision energy due to disposing the main portions 16 of the reinforcement member 14 at positions that include the framework facing sections 40A of the bumper reinforcement 40.

In the vehicle body framework structure S3 of the third exemplary embodiment as described above, the bumper reinforcement 40 can be reduced, or even suppressed from breaking, and collision load can be efficiently transmitted to the crash boxes 42 and the front side members.

### Supplemental Explanation of the Above Exemplary Embodiments

In each of the exemplary embodiments described above, the cross-section profile of the framework member 12 is configured in a rectangular shape; however, the exemplary embodiments are not limited thereto and, for example, the cross-section profile of the framework member may be substantially hexagonal. The material of the framework member and the reinforcement member is not limited to CFRP, and for example, may be glass fiber reinforced plastic (GFRP) or an aluminum alloy. Moreover, the framework member and the reinforcement member may be configured by different materials. The hollow framework member may be formed by welding two sheet members together.

In each of the exemplary embodiments described above, the reinforcement member 14 is joined to the framework member 12 by vibration welding; however, the exemplary embodiments are not limited thereto. For example, joining may be performed using an adhesive. The reinforcement member may be joined to the framework member by welding or by rivets.

In the third exemplary embodiment, explanation has been given in which an embodiment of the present disclosure is applied to (front) bumper reinforcement 40. However, application may be made to various other vehicle body framework members such as rear bumper reinforcement, front pillars, center pillars, rear pillars, rockers (side sills), or roof side rails.

When viewed in respective horizontal cross-sections running along the length direction of the framework member 12, the reinforcement member 14 of the first exemplary embodiment is equipped with the leading end portions 18 shaped so as to separate away from both of the pair of the inner faces 20, 22 from the same point; however, the present disclosure is not limited thereto. In other words, in the first exemplary embodiment, as illustrated in Fig. 1B, positions (coordinates) where a portion (point P) at which the front wall 14F of the reinforcement member 14 begins to separate from the one inner face 20 of the framework member 12 and where a portion (point Q) at which the rear wall 14R of the reinforcement member 14 begins to separate from the other inner face 22 of the framework member 12, are aligned with each other along the axial direction of the framework member 12 (the left-right direction). However, the present disclosure is not limited thereto, and the position of the point P in the axial direction of the framework member and the position of the point Q in the axial direction of the framework member may be configured so as not to be aligned with each other. In such cases, the reinforcement member includes a connection portion between the main portion and the leading end portion configured in a shape that makes contact with one of the pair of opposing inner faces of the framework member and that separates from the other of the pair of inner faces.

In the above exemplary embodiments, explanation has been given in which a reinforcement member has a rectangular cross-section profile or a hat shaped cross-section profile; however, the exemplary embodiments are not limited thereto. Various shapes may be employed as long as they are shapes that include the main portion contacting the opposing inner faces 20, 22 of the framework member 12 and the leading end portion gradually separating away from the pair of inner faces 20, 22. The reinforcement member 14, 34 in the respective exemplary embodiments above are provided with the leading end portion 18 on one side (for example, the left side) of the main portion 16. However, the exemplary embodiments are not limited thereto, and a pair of leading end portions may be included on both sides of the main portion (on the left and right sides thereof).

## Claims

1. A vehicle body framework structure comprising:
a framework member (12) that is formed in an elongated rectangular tube shape; and
at least a reinforcement member (14) that is disposed inside the framework member (12); and that includes
a main portion (16) that is configured in a shape contacting both of a pair of opposing inner faces (20, 22) of the framework member (12), and
a leading end portion (18) that is configured in a shape that gradually separates away from both of the pair of inner faces (20, 22).

2. The vehicle body framework structure of claim 1, wherein:
the framework member (12) comprises bumper reinforcement (40) configured to extende along a vehicle width direction and that is configured to be attached to both of a pair of front ends of coupling members extending along a vehicle front-rear direction on either vehicle width direction side of a vehicle front section; and
a pair of the reinforcement member (14) is disposed respectively at both of a pair of vehicle width direction ends of the bumper reinforcement (40), and
each of the reinforcement members (14) is disposed such that the leading end portion (18) is configured to be directed toward a vehicle width direction inside, and the main portion (16) is disposed at a position including a portion of the bumper reinforcement (40) configured to face the front end of the respective coupling member.

3. The vehicle body framework structure of claim 1 or claim 2, wherein the main portion (16) has a rectangular cross-section profile orthogonal to a length direction of the reinforcement member (14).

4. The vehicle body framework structure of claim 1 or claim 2, wherein the main portion (16) has a hat shaped cross-section profile orthogonal to a length direction of the reinforcement member (14).

5. The vehicle body framework structure of claim 4, wherein the main portion (16) comprises:
a front wall (34F) that contacts a first face (20) of the pair of opposing inner faces of the framework member (12);
an upper wall (34U) and a lower wall (34L) that extend from each respective end portion of the front wall (34F) toward a second face (22) of the pair of opposing inner faces of the framework member (12); and
a pair of rear walls (34R) that extend from respective end portions of the upper wall (34U) and the lower wall (34L), the pair of rear walls contacting the second face (22) and extending along said second face.

6. An assembly comprising coupling members configured to extend along a vehicle front-rear direction on either vehicle width direction side of a vehicle front section, and a vehicle body framework structure according to any one of claims 1 to 5.

7. A vehicle comprising a vehicle body framework structure according to any one of claims 1 to 5 or an assembly according to claim 6.
